# EUROPÄISCHE PATENTSCHRIFT

(11) **EP 1 949 782 B1**
(45) Veröffentlichungstag und Bekanntmachung des Hinweises auf die Patenterteilung: **13.05.2009**
(21) Anmeldenummer: 08405019.4
(22) Anmeldetag: 18.01.2008
(51) Int. Cl.: A01D 34/90, A01D 46/04

(54) **Schnittgerät**
Cutting device
Appareil de coupe

(30) Priorität: 24.01.2007 CH 1052007
(43) Veröffentlichungstag der Anmeldung: 30.07.2008
(73) Patentinhaber: Meyer, Jörg, 8330 Pfaffikon ZH (CH)
(72) Erfinder: Meyer, Jörg, 8330 Pfaffikon ZH (CH)
(74) Vertreter: Frei Patent Attorneys

(56) Entgegenhaltungen:
- EP-A- 0 220 008
- WO-A-20/06120377
- FR-A1- 2 738 710
- US-A- 2 484 753
- US-A- 5 862 595
- US-A- 6 105 253
- US-A1- 2003 051 348
- US-A1- 2006 225 287

## Beschreibung

Die Erfindung bezieht sich auf das Gebiet der Schnittgeräte, insbesondere auf ein tragbares Schnittgerät für Pflanzen sowie eine Grundeinheit und eine Erweiterungseinheit gemäss dem Oberbegriff der entsprechenden unabhängigen Patentansprüche.

### STAND DER TECHNIK

Derartige Schnittgeräte sind beispielsweise zum Ernten von Tee und zum Schneiden von Sträuchern bekannt. Sie weisen eine oszillierendes Messerpaar auf, sowie ein Gebläse, welches das Schnittgut in einen Sammelsack bläst. Die Geräte werden durch zwei oder mehr Personen über die zu schneidenden respektive abzuerntenden Pflanzen entlang geführt. Bestehende Geräte sind aufwändig in der Bedienung.

US 2006/225287 A1 offenbart eine Heckenschere mit einem daran befestigten Sauggerät. Das Sauggerät ist glockenartig über dem Messerbalken angeordnet und soll Schnittgut ansaugen Das Sauggerät weist zwei drehende Messer auf, welche einerseits als Propeller zum Ansaugen des abgeschnittenen Schnittgutes wirken, und andererseits das abgeschnittene Schnittgut zerhacken und zermahlen, bevor es in einen Sammelbehälter gefördert wird. Die Heckenschere wird an zwei Handgriffen festgehalten, der Sammelbehälter wird auf dem Rücken getragen.

US 2,484,753 zeigt eine Heckenschere welche lediglich 5 Pfund wiegt, und insgesamt, d.h. mit einem Halterahmen, 13.3 cm breit und 42 cm lang ist (5.25 Zoll und 16.5 Zoll). Die Grundfläche des Gerätes ist also kleiner als ein Blatt A4-Papier. Ein einzelnes Messer dreht mit derart hoher Geschwindigkeit, dass das Schnittgut bereits durch das Schneiden ähnlich fein wie Sägespäne sein soll. Ein zylindrischer Antriebsmotor ist im Halterahmen gehalten. Der Halterahmen ist im Wesentlichen rechteckförmig. Er erstreckt sich an einer Seite des Motors und ist abgeknickt, so dass der Schwerpunkt des Gerätes, wenn die Schere nur an einer äusseren Querstrebe des Halterahmen aufgehängt wird, direkt unter dieser Querstrebe liegt, und so das Gerät exakt senkrecht hängt. Der Halterahmen ist derart mit dem Gerät verbunden, dass derjenige Teil des Halterahmens, der mit den Händen umschlossen werden kann - und somit die Funktion eines Haltebügels hat - sich nur auf einer Seite des Motors befindet und nicht als um den Motor umlaufend bezeichnet werden kann. Auch ist es angesichts der kleinen Dimensionen und mit Rücksicht auf die Finger des Benutzers nicht denkbar, dass das Gerät in der Nähe des Motors ergriffen wird, sondern nur der äusserste, vom Motor entfernte Bereich des viereckigen Halterahmens mit der Querstrebe als Haltegriff dient.

EP 0 220 008 A1 beschreibt eine Haltevorrichtung, in welcher eine handelsübliche elektrische Heckenschere montiert und so zum Schneiden von hoch gelegenen Pflanzen verwendet werden kann. Die Haltevorrichtung besteht aus einem Haltekasten, in welchem die Heckenschere eingespannt ist, und einem an den Halterahmen angeschweissten Haltebügel. Der Halterahmen weist in sich ein Drehgelenk auf, wodurch der Winkel zwischen Haltebügel und Schere verstellbar ist. Der Bügel weist zwei parallele Stangen auf, die mit einer Querstrebe verbunden sind. Die parallelen Stangen sind teleskopartig ausziehbar. An der Querstrebe ist ein Schalter zur Unterbrechung der Stromzufuhr der Heckenschere montiert.

### DARSTELLUNG DER ERFINDUNG

Es ist deshalb Aufgabe der Erfindung, ein tragbares Schnittgerät der eingangs genannten Art zu schaffen, welches eine verbesserte Handhabung ermöglicht.

Diese Aufgabe lösen ein tragbares Schnittgerät sowie eine Grundeinheit und eine Erweiterungseinheit mit den Merkmalen der entsprechenden unabhängigen Patentansprüche.

Das Schnittgerät ist also zum Schneiden von Pflanzen ausgebildet und weist eine Grundeinheit, und eine Sammeleinheit zum Sammeln von Schnittgut auf, wobei die Grundeinheit ferner eine Schnitteinheit zum Schneiden der Pflanzen aufweist, und die Schnitteinheit wiederum einen Antrieb, Messer und ein Gebläse mit Düsen, um das Schnittgut in die Sammeleinheit zu blasen, aufweist. Dabei weist die Grundeinheit einen an mindestens drei Seiten der Grundeinheit vorzugsweise U-förmig umlaufenden Haltebügel auf.

Der Haltebügel kann von der Hand eines Bedieners umschlossen oder umgriffen werden, so dass das Gerät in verschiedenen Arbeitspositionen sicher gehalten werden kann, indem der Haltegriff an der jeweils für eine Arbeitsposition günstigsten Stelle umgriffen werden kann. Der umlaufende Haltebügel verläuft daher vorzugsweise an den mindestens drei umlaufenen Seiten über die ganze Länge der jeweiligen Seiten der Grundeinheit.

Dadurch wird es möglich, weitere Elemente wie Zusatzbügel und sicherheitsrelevante Elemente wie mehrfache Totmannschalter in vielseitiger Weise am Haltebügel lösbar zu befestigen. Dadurch wird das Schnittgerät in verschiedenen Konfigurationen einsetzbar.

Dazu weist das Schnittgerät beispielsweise eine Erweiterungseinheit auf, welche wiederum aufweist: einen vorzugsweise U-förmigen Zusatzbügel, welcher mittels Verbindungsgelenken verstellbar und vorzugsweise lösbar am Haltebügel befestigt ist. Die Verbindungsgelenke verbinden dabei die beiden Schenkel des Zusatzbügels und die beiden Schenkel des Haltebügels miteinander. Der Zusatzbügel kann bezüglich des Haltebügels verschoben und/oder verdreht werden. Damit ist es möglich, das Schnittgerät durch eine einzige Bedienperson in Bodennähe einzusetzen, und das Schnittgerät durch Verstellen der Position des Haltebügels entsprechend Körpergrösse und Arbeitshöhe auszubalancieren, so dass ein entspanntes Arbeiten möglich ist. Dabei ist das Gerät an die Arbeitshöhe und an die Grösse der Bedienperson anpassbar.

In einer bevorzugten Ausführungsform der Erfindung weist die Erweiterungseinheit ferner auf:
- einen Schaltgriff, der mittels eines Kupplungsgelenkes verstellbar wahlweise am Zusatzbügel oder am Haltebügel montierbar ist, wobei der Schaltgriff einen Gashebel zur Ansteuerung des Antriebes aufweist, und
- einen Sicherungsgriff, der mittels eines Griffhalters verstellbar wahlweise am Zusatzbügel oder am Haltebügel montierbar ist, wobei der Sicherungsgriff einen Sicherungsschalter zur Ansteuerung des Antriebes aufweist.

Damit ist eine doppelte Sicherung vorhanden, und beide Hände der Bedienperson müssen in einer definierten Stellung sein, solange die Messer laufen. Sowohl der Gashebel als auch der Sicherungsschalter, unterbrechen oder bremsen also, sobald sie nicht betätigt sind, zumindest die Bewegung des Messers. Es ist auch denkbar, dass beim Loslassen eines bestimmten der beiden Schalter auch das Gebläse und gegebenenfalls auch der Antrieb ausgeschaltet werden.

In einer weiteren bevorzugten Ausführungsform der Erfindung weist die Sammeleinheit einen Tragegurt auf, mit dem die Sammeleinheit durch eine Bedienperson des Schnittgerätes tragbar ist. Damit kann das Schnittgerät durch eine einzige Person frei eingesetzt werden, ohne dass die Sammeleinheit wie üblich durch eine Hilfsperson gehalten werden muss, oder am Boden nachgeschleppt wird.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Ansicht eines Schnittgerätes gemäss der Erfindung;
- Figuren 2 und 3: Ansichten des Schnittgerätes in einer anderen Konfiguration;
- Figur 4: Elemente einer Erweiterungseinheit für ein Schnittgerät.
- Figuren 5 und 6: sind Fotografien entsprechend den Figuren 1 und 2.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

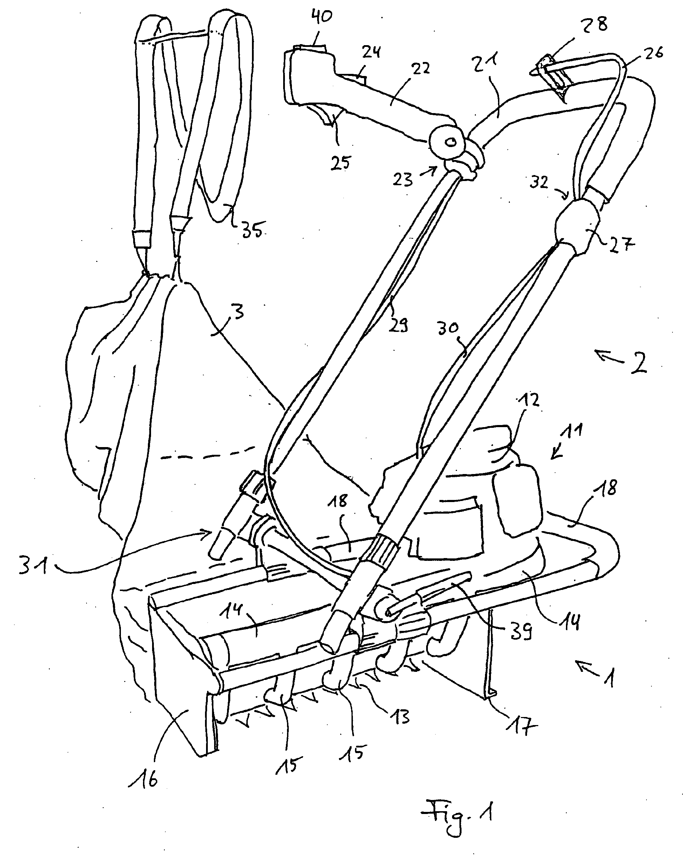

Figur 1 zeigt eine Ansicht eines Schnittgerätes 10 gemäss der Erfindung. Das Schnittgerät 10 weist eine Grundeinheit 1 und eine Erweiterungseinheit 2 auf. Die Grundeinheit 1 wiederum weist eine Schnitteinheit 11 mit einem Antrieb 12 (beispielsweise einem Benzinmotor), einem Messer oder Messerbalken 13 und einem Gebläse 14 auf. Das Messer 13 ist an einer Unterseite eines Führungsgehäuses 16 angeordnet und gegen eine Vorderseite des Führungsgehäuses 16 gerichtet. Düsen 15 des Gebläses 14 sind an der Vorderseite des Führungsgehäuses 16 angeordnet und blasen Schnittgut, das von den Messern 13 abgetrennt wurde, durch das Führungsgehäuse 16 in eine Sammeleinheit 3. Das Schnittgut wird also nicht angesaugt, sondern schon vor dem Schnitt gegen den Messserbalken geblasen. Nach dem Schnitt wird das abgeschnittene Schnittgut über den Messerbalken 13 in die Sammeleinheit 3 geblasen. So ist ein stärkerer Luftstrom mit einer stärkeren Förderwirkung erzeugbar, und die Schnittqualität wird verbessert.

Die Sammeleinheit 3 ist beispielsweise ein luftdurchlässiger Sack oder ein Sack mit einer Luftaustrittsöffnung, und mit einem Volumen von beispielsweise 3 m³. Damit kann rund 1 m³ Material gesammelt werden. Die Sammeleinheit 3 weist einen Tragegurt 35 auf, mit dem die Sammeleinheit 3 durch einen Bediener des Schnittgerätes 10 getragen werden kann. Die beiden Enden des Tragegurts 35 sind an zwei voneinander beabstandeten Stellen an eine im Sack eingenähte Verstärkung gehängt.

Am Führungsgehäuse 16 ist vorzugsweise ein Stützfuss 17 ausgebildet, welcher ein Kippen des Schnittgerätes 10 im abgestellten Zustand verhindert.

Zum Halten des Schnittgerätes 10 ist ein an mindestens drei Seiten der Schnitteinheit 11 umlaufender, vorzugsweise U-förmiger Haltebügel 18, an der Schnitteinheit 11 befestigt. Die beiden freien Schenkel der U-Form verlaufen parallel zueinander. Dadurch wird es möglich, dass ein Zusatzbügel 21 verschiebbar am Haltebügel 18 befestigbar ist. Der Zusatzbügel 21 weist ebenfalls eine U-Form auf, dessen freie Enden parallel verlaufen und durch Verbindungsgelenke 31 an die freien Schenkel des Haltebügels 18 gekoppelt sind. Diese Verbindungsgelenke 31 sind im Betrieb des Schnittgerätes 10 nicht beweglich, können aber zum Einstellen auf andere Arbeitsstellungen und zum Transport gelöst werden, vorzugsweise werkzeugfrei.

Der U-förmige Haltebügel 18 ist vorzugsweise, je nach Modellgrösse, rund 40 cm bis 75 cm lang und 25 cm bis 30 cm breit. Der Zusatzbügel 21 ist vorzugsweise rund 80 cm bis 120 cm lang und 35 cm bis 40 cm breit.

Der Zusatzbügel 21 ist Teil einer Erweiterungseinheit 2, welche ferner noch einen Schaltgriff 22 und einen Sicherungsgriff 26 aufweist. Der Schaltgriff 22 weist Bedienelemente zur Ansteuerung des Antriebes 12 auf, und ist dazu über ein Schaltkabel 29 mit dem Antrieb 12 verbindbar. Der Sicherungsgriff 26 dient ebenfalls zur Ansteuerung des Antriebes 12 und ist dazu über ein Sicherungskabel 30 mit dem Antrieb 12 verbindbar. Sowohl der Schaltgriff 22 als auch der Sicherungsgriff 26 realisieren eine Totmannfunktion, das heisst, dass beim Loslassen des Schaltgriffs 22 oder des Sicherungsgriffes 26 zumindest die Bewegung der Messer 13 gestoppt wird. Der Schaltgriff 22 und/oder auch der Sicherungsgriff 26 wirken elektrisch oder mechanisch (Bowdenzüge) auf den Antrieb 12. Dies geschieht vorzugsweise als Zweikreis-Sicherheitsschaltung, bei der beispielsweise der Gashebel 25 mechanisch oder elektrisch den Antrieb regelt (und diesen beim Loslassen vorzugsweise stoppt), und der Sicherungsgriff 26 die Zündung unterbricht. Ein Verriegelungshebel 24 muss gedrückt sein, damit der Gashebel 25 betätigt werden kann. Vorzugsweise ist am Schaltgriff 22 noch ein Not-Aus-Taster 40 zum aktiven Abstellen angebracht.

Der Schaltgriff 22 ist mittels eines Kupplungsgelenkes 23 am Zusatzbügel 21 oder am Haltebügel 18 befestigbar. Dabei lässt das Kupplungsgelenk 23 vorzugsweise mindestens eine oder mehrere der folgenden Bewegungen zu:
- eine Verschiebung entlang des jeweiligen Bügels,
- eine Rotation um die Achse des Bügels,
- eine Verdrehung um die Achse des Schaltgriffs 22 und
- ein Kippen, das heisst ein Ändern des Winkels zwischen dem Schaltgriff 22 und dem jeweiligen Bügelabschnitt.

Dadurch ist eine optimale Anpassung auf verschiedenste Arbeitssituationen, linkshändiges Arbeiten und auf den Betrieb mit und ohne Zusatzbügel 21 möglich.

Der Sicherungsgriff 26 ist mittels eines Griffhalters 27 an einem der Schenkel des Haltebügels 18 oder des Zusatzbügels 21 befestigbar. Der Griffhalter 27 weist einen Sicherungsschalter 32 auf, der über das Sicherungskabel 30 den Antrieb 12 ansteuert. Der Sicherungsgriff 26 ist im Griffhalter 27 gelagert, so dass er zur Betätigung gegen den Haltebügel 18 oder Zusatzbügel 21 gedrückt werden kann. Vorzugsweise ist das vom Griffhalter 27 entfernte Ende des Sicherungsgriffes 26 in einer Griffführung 28 geführt oder gehalten, um vor dem ungewollten Verbiegen geschützt zu sein. Die Griffführung 28 besteht beispielsweise aus einem geschlitzten Teil, im einfachsten Fall einem geschlitzten Blech, durch welches das Ende des Sicherungsgriffes 26 geführt ist. Die Form des Sicherungsgriffes 26 folgt der Form des Haltebügels 18 oder des Zusatzbügels 21 entlang von unterschiedlich gerichteten Abschnitten des jeweiligen Bügels, so dass eine Betätigung des Sicherungsgriffes 26 in beiden Abschnitten möglich ist. In der Figur sind die beiden Abschnitte im wesentlichen annähernd senkrecht zueinander. In den Figuren ist der Sicherungsgriff 26 oberhalb des Haltebügels 18 oder Zusatzbügel 21 gezeigt, er kann aber jeweils auch unterhalb angeordnet sein.

Das Schnittgerät 10 kann also in verschiedenen Konfigurationen betrieben werden. Bei Verwendung mit dem Zusatzbügel 21 wird dieser vorzugsweise so angeordnet, dass die freien Enden des Zusatzbügels 21 mittels der verstellbaren Verbindungsgelenke 31 an den freien Enden des Haltebügels 18 befestigt sind. Die Verbindungsgelenke 31 können dabei sowohl entlang der jeweils parallelen Schenkel des Zusatzbügels 21 wie auch des Haltebügels 18 verschoben und arretiert werden und auch in verschiedenen Winkelpositionen arretiert werden. Den freien Enden des Haltebügels 18 gegenüber befindet sich ein Griffbereich des Haltebügels 18. Der Antrieb 12 ist zweckmässigerweise in der Nähe dieses Griffbereichs angeordnet. Der Zusatzbügel 21 ist in der entgegengesetzten Hälfte des Haltebügels 18 befestigt, so dass das Schnittgerät 10 am Griffbereich des Zusatzbügels 21 festgehalten werden kann, wobei dieser Griffbereich etwa über dem Schwerpunkt des gesamten Schnittgerätes 10 liegt. Beim Einsatz mit dem Zusatzbügel 21 sind für Arbeiten in Bodennähe Schaltgriff 22 und Sicherungsgriff 26 beide am Zusatzbügel 21 angeordnet.

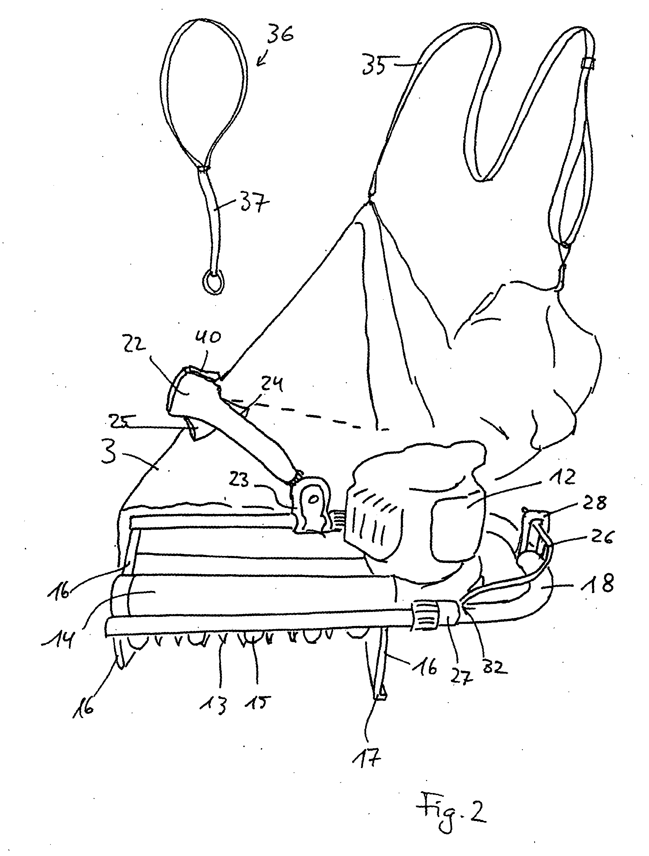

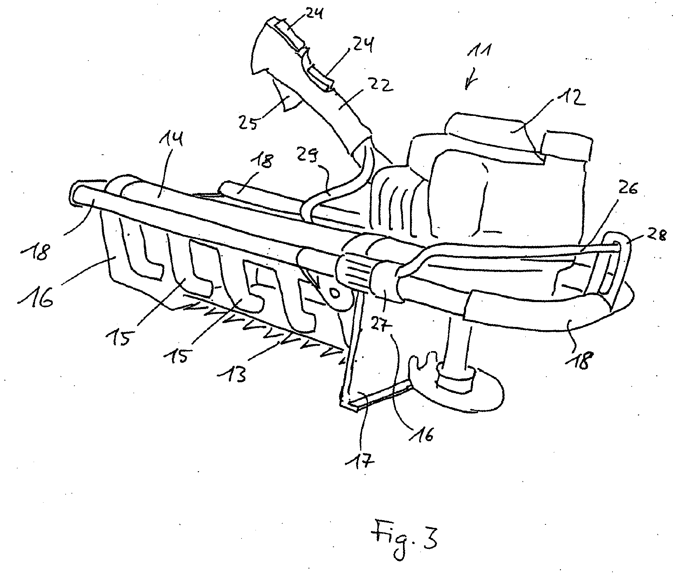

Figuren 2 und 3 zeigen Ansichten eines Schnittgerätes 10, bei welcher der Zusatzbügel 21 nicht im Einsatz ist. Dabei sind Schaltgriff 22 und Sicherungsgriff 26 beide am Haltebügel 18 angeordnet.

Vorzugsweise weist die Grundeinheit 1 einen Entlastungsgurt 36 auf, mit dem zumindest ein Teil des Gewichtes der Grundeinheit 1 auf eine Bedienperson des Schnittgerätes 10 übertragbar ist. Dazu ist der Entlastungsgurt 36 an der Schnitteinheit 11 lösbar befestigbar. Der Entlastungsgurt 36 weist vorzugsweise einen dehnbaren Abschnitt 37 auf, so dass das Schnittgerät 10 (in einem bestimmten Bereich) flexibel eingesetzt werden kann. Vorzugsweise ist der dehnbare Abschnitt 37 in seiner Länge verstellbar, beispielsweise von 35 cm bis 60 cm.

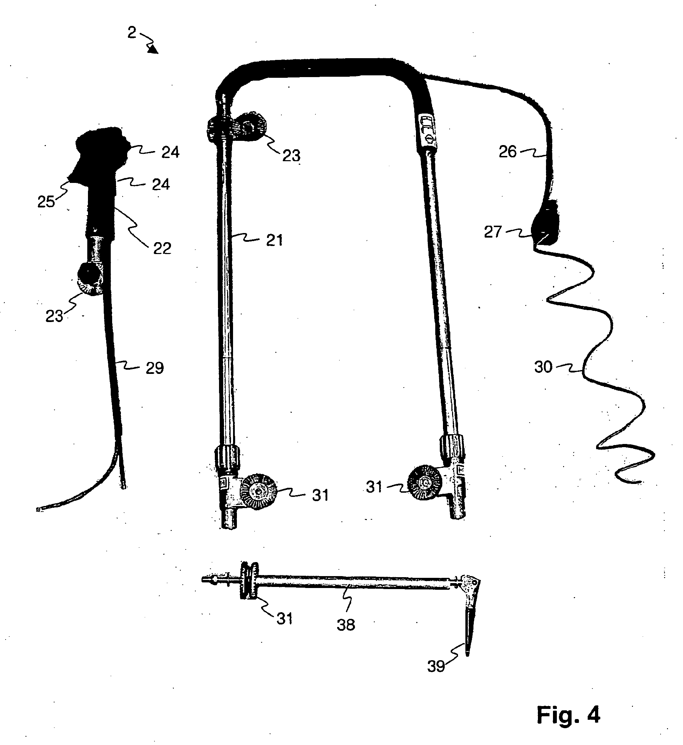

Figur 4 zeigt die Erweiterungseinheit 2 für sich alleine. Zur Montage des Zusatzbügels 21 ist hier eine Spannstange 38 mit einem Schnellspanngriff 39 gezeigt. Durch Umlegen des Schnellspanngriffes 39 (werkzeugfrei) werden Zahnscheiben am Zusatzbügel 21 und an Haltebügel 18 gegeneinander gedrückt, so dass diese gegen Verdrehen gesichert sind. Die Verbindungsgelenke 31 sind entlang der Schenkel des Zusatzbügels 21 verschiebbar und durch Drehen von Fixierringen der Verbindungsgelenk 31 werkzeugfrei feststellbar. Die Verbindungsgelenke 31 sind ebenfalls entlang der Schenkel des Haltebügels 18 verschiebbar. Die Ebene des Zusatzbügels 21 und die Ebene des Haltebügels 18 sind also gegeneinander verschiebbar und um eine Achse entsprechend der Ausrichtung der Spannstange 38 gegeneinander verdrehbar.

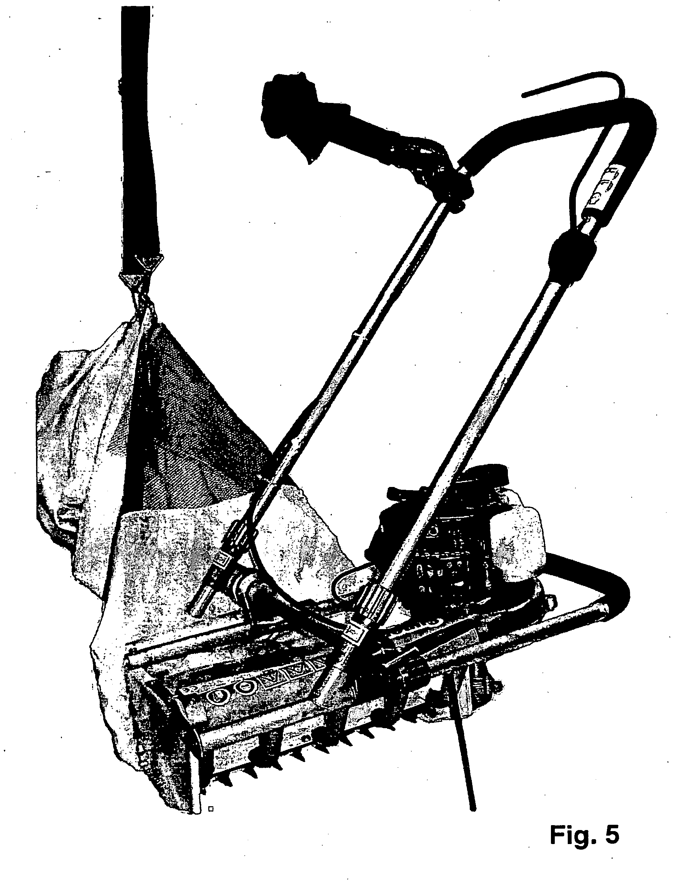

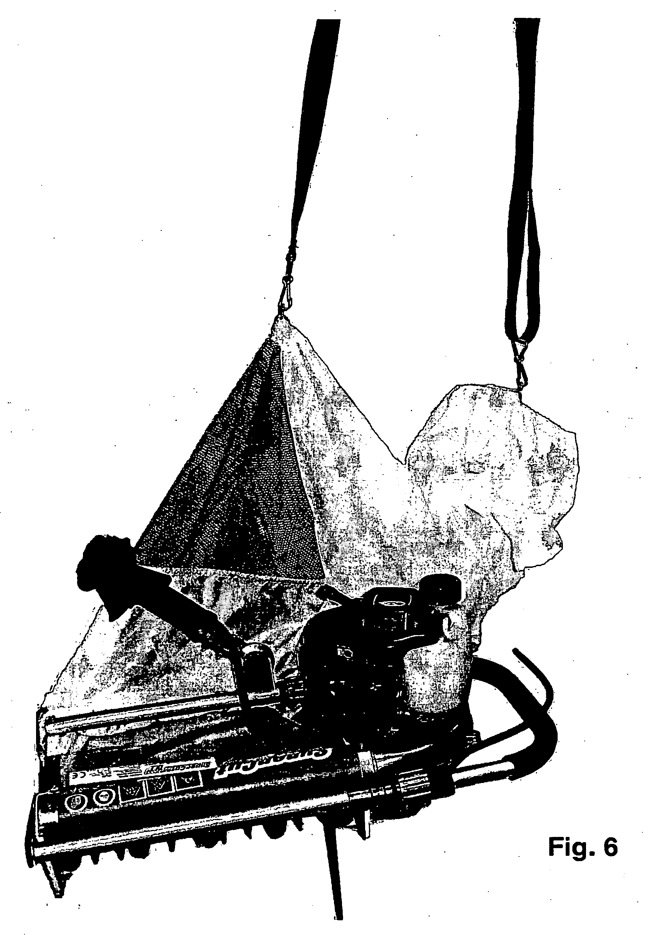

**Figuren 5** und **6** sind Fotografien, entsprechend im Wesentlichen den Figuren 1 un 2. Die Fotografien zeigen anstelle des Stützfusses 17 als Teil des Führungsgehäuse 16 ein separat ausgebildetes Stützbein vor den Messern.

### BEZUGSZEICHENLISTE

- 1: Grundeinheit
- 2: Erweiterungseinheit
- 3: Sammeleinheit
- 10: Schnittgerät
- 11: Schnitteinheit
- 12: Antrieb
- 13: Messer
- 14: Gebläse
- 15: Düse
- 16: Führungsgehäuse
- 17: Stützfuss
- 18: Haltebügel
- 21: Zusatzbügel
- 22: Schaltgriff
- 23: Kupplungsgelenk
- 24: Schalter
- 25: Gashebel
- 26: Sicherungsgriff
- 27: Griffhalter
- 28: Griffführung
- 29: Schaltkabel
- 30: Sicherungskabel
- 31: Verbindungsgelenk
- 32: Sicherungsschalter
- 35: Tragegurt
- 36: Entlastungsgurt
- 37: dehnbarer Abschnitt
- 38: Spannstange
- 39: Schnellspanngriff
- 40: Not-Aus-Schalter

## Patentansprüche

1. Tragbares Schnittgerät (10) zum Schneiden von Pflanzen, aufweisend eine Grundeinheit (1), und eine Sammeleinheit (3) zum Sammeln von Schnittgut, wobei die Grundeinheit (1) ferner eine Schnitteinheit (11) zum Schneiden der Pflanzen aufweist, und die Schnitteinheit (11) wiederum einen Antrieb (12), Messer (13) und ein Gebläse (14) mit Düsen (15), um das Schnittgut in die Sammeleinheit (3) zu blasen, aufweist,
**dadurch gekennzeichnet, dass**
• die Grundeinheit (1) einen an mindestens drei Seiten der Grundeinheit (1) umlaufenden Haltebügel (18) aufweist.

2. Schnittgerät (10) gemäss Anspruch 1, wobei das Schnittgerät (10) eine Erweiterungseinheit (2) aufweist, welche wiederum aufweist
• einen Zusatzbügel (21), welcher mittels Verbindungsgelenken (31) verstellbar und vorzugsweise lösbar am Haltebügel (18) befestigt ist.

3. Schnittgerät (10) gemäss Anspruch 2, wobei die Erweiterungseinheit (2) ferner aufweist
• einen Schaltgriff (22), der mittels eines Kupplungsgelenkes (23) verstellbar wahlweise am Zusatzbügel (21) oder am Haltebügel (18) montierbar ist, wobei der Schaltgriff (22) einen Gashebel (25) zur Ansteuerung des Antriebes (12) aufweist, und
• einen Sicherungsgriff (26), der mittels eines Griffhalters (27) verstellbar wahlweise am Zusatzbügel (21) oder am Haltebügel (18) montierbar ist, wobei der Sicherungsgriff (26) einen Sicherungsschalter (32) zur Ansteuerung des Antriebes (12) aufweist.

4. Schnittgerät (10) gemäss Anspruch 3, wobei sowohl der Gashebel (25) als auch der Sicherungsschalter (32), sobald sie nicht betätigt sind, zumindest eine Bewegung des Messers (13) unterbrechen.

5. Schnittgerät (10) gemäss Anspruch 3 oder 4, wobei der Sicherungsgriff (26) einer Krümmung des Zusatzbügel (21) respektive des Haltebügels (18) folgend ausgebildet ist und so an zwei zueinander im Winkel stehenden Abschnitten des Zusatzbügels (21) respektive des Haltebügels (18) betätigbar ist, wobei der genannte Winkel vorzugsweise mindestens annähernd ein rechter Winkel ist.

6. Schnittgerät (10) gemäss einem der bisherigen Ansprüche, wobei die Sammeleinheit (3) einen Tragegurt (35) aufweist, mit dem die Sammeleinheit (3) durch eine Bedienperson des Schnittgerätes (10) tragbar ist.

7. Schnittgerät (10) gemäss einem der bisherigen Ansprüche, wobei die Grundeinheit (1) einen Entlastungsgurt (36) aufweist, mit dem zumindest ein Teil des Gewichtes der Grundeinheit (1) auf eine Bedienperson des Schnittgerätes (10) übertragbar ist.

8. Schnittgerät (10) gemäss Anspruch 7, wobei der Entlastungsgurt (36) einen dehnbaren Abschnitt (37) aufweist.

9. Schnittgerät (10) gemäss Anspruch 8, wobei der dehnbare Abschnitt (37) in seiner Länge verstellbar ist, insbesondere in einem Bereich zwischen 35 cm und 60 cm.

10. Schnittgerät (10) gemäss einem der bisherigen Ansprüche, wobei an einem Führungsgehäuse (16), durch welches das Schnittgut in die Sammeleinheit (3) geblasen wird, ein Stützfuss (17) ausgebildet ist, der ein Abkippen des auf eine eben Grundfläche abgestellten Schnittgerätes (10) verhindert.

11. Grundeinheit (1) für ein tragbares Schnittgerät (10) gemäss einem der bisherigen Ansprüche, wobei die Grundeinheit (1) eine Schnitteinheit (11) zum Schneiden der Pflanzen aufweist, und die Schnitteinheit (11) wiederum einen Antrieb (12), Messer (13) und ein Gebläse (14) mit Düsen (15), um das Schnittgut in eine Sammeleinheit (3) zu blasen, aufweist,
**dadurch gekennzeichnet, dass**
• die Grundeinheit (1) einen an mindestens drei Seiten der Grundeinheit (1) umlaufenden Haltebügel (18) aufweist.

12. Erweiterungseinheit (2) für ein tragbares Schnittgerät (10) gemäss einem der Ansprüche 1 bis 10, aufweisend
• einen Zusatzbügel (21), welcher mittels Verbindungsgelenken (31) verstellbar und vorzugsweise lösbar am Haltebügel (18) befestigt ist,
• einen Schaltgriff (22), der mittels eines Kupplungsgelenkes (23) verstellbar wahlweise am Zusatzbügel (21) oder am Haltebügel (18) montierbar ist, wobei der Schaltgriff (22) einen Gashebel (25) zur Ansteuerung des Antriebes (12) aufweist, und
• einen Sicherungsgriff (26), der mittels eines Griffhalters (27) verstellbar wahlweise am Zusatzbügel (21) oder am Haltebügel (18) montierbar ist, wobei der Sicherungsgriff (26) einen Sicherungsschalter (32) zur Ansteuerung des Antriebes (12) aufweist.

13. Erweiterungseinheit (2) gemäss Anspruch 12, wobei der Zusatzbügel (21) mittels der Verbindungsgelenke (31) bezüglich des Haltebügels (18) verschiebbar ist.

14. Erweiterungseinheit (2) gemäss Anspruch 12 oder 13, wobei der Zusatzbügel (21) mittels der Verbindungsgelenke (31) bezüglich des Haltebügels (18) verdrehbar ist.

## Claims

1. Portable cutting apparatus (10) for cutting plants, comprising a basic unit (1), a collection unit (3) for collecting plant clippings, wherein the basic unit (1) further comprises a cutting unit (11) for cutting of plants and the cutting unit (11) again comprises a drive (12), blades (13) and a blower (14) with nozzles (15) for blowing the plant clippings into the collection unit (3), **characterized in that**
• the basic unit (1) comprises a handle (18) encompassing the basic unit (1) on at least three sides.

2. Cutting apparatus (10) according to claim 1, wherein the cutting apparatus (10) comprises an extension unit (2), which again comprises
• an additional handle (21), which is fixed by means of connecting joints (31) to the handle (18) in an adjustable and preferably detachable manner.

3. Cutting apparatus (10) according to claim 2, wherein the extension unit further comprises
• a control stick (22), which is adjustably mountable by means of a coupling joint (23) on the additional handle (21) or on the handle (18), wherein the control stick (22) comprises a throttle lever (25) for control of the drive (12), and
• a safety lever (26), which is, by means of a lever mount (27) adjustably mountable either to the additional handle (21) or the handle (18), wherein the safety lever (26) comprises a safety switch (32) for controlling the drive (12).

4. Cutting apparatus (10) according to claim 3, wherein the throttle lever (25) as well as the safety switch (32), as soon as they are not operated, at least interrupt the movement of the blade (13).

5. Cutting apparatus (10) according to claim 3 or 4, wherein the safety lever (26) is designed to follow a curvature of the additional handle (21) or the handle (18) and thus is operable on two sections of the additional handle (21) or the handle (18) respectively, wherein said two sections are at an angle to one another, wherein the named angle is preferably at least approximately a right angle.

6. Cutting apparatus (10) according to one of the preceding claims, wherein the collection unit (3) comprises a carrying strap (35) with which the collection unit (3) may be carried by a person operating the cutting apparatus (10).

7. Cutting apparatus (10) according to one of the preceding claims, wherein the basic unit (1) comprises a relieving strap (36) with which at least part of the weight of the basic unit (1) is transferable to a person operating the cutting apparatus (10).

8. Cutting apparatus (10) according to claim 7, wherein the relieving strap (36) comprises an expandable section (37).

9. Cutting apparatus (10) according to claim 8, wherein the expandable section (37) is adjustable in length, in particular in a range between 35 cm and 60 cm.

10. Cutting apparatus (10) according to one of the preceding claims, wherein on a guiding casing (16), through which the clippings are blown into the collection unit (3), a supporting foot (17) is provided which prevents a tilting of the cutting apparatus (10), when it is placed on a flat surface.

11. Basic unit (1) for a portable cutting apparatus (10) according to one of the preceding claims, wherein to basic unit (1) comprises a cutting unit (11) for cutting plants and the cutting unit (11) again comprises a drive (12), blades (13) and a blower (14) with nozzles (15) in order to blow the clippings into a collection unit (3), **characterized in that**
• the basic unit (1) comprises a handle (18) encompassing the basic unit (1) on at least three sides.

12. Extension unit (2) for a portable cutting apparatus (10) according to one of claims 1 to 10, comprising
• an additional handle (21), which by means of connecting joints (31) is adjustable and preferably removably fixed to the handle (18),
• a control stick (22), which, by means of a coupling joint (23), is mountable either to the additional handle (21) or the handle (18), wherein the control stick (22) comprises a throttle lever (25) for control of the drive (12), and
• a safety lever (26), which is, by means of a lever mount (27) adjustably mountable either to the additional handle (21) or the handle (18), wherein the safety lever (26) comprises a safety switch (32) for controlling the drive (12).

13. Extension unit (2) according to claim 12, wherein the additional handle (21) is movable by means of the connection joints (31) in relation to the handle (18).

14. Extension unit (2) according to claim 12 or 13, wherein the additional handle (21) is rotatable in relation to the handle (18).

## Revendications

1. Appareil de coupe portatif (10) destiné à couper des plantes, présentant une unité de base (1), et une unité de collecte (3) destinée à collecter le produit coupé, l'unité de base (1) présentant en outre une unité de coupe (11) destinée à couper les plantes, et l'unité de coupe (11) présentant un entraînement (12), une lame (13) et une soufflante (14) dotée de buses (15), afin de souffler le produit coupé dans l'unité de collecte (3),
**caractérisé en ce que**
l'unité de base (1) présente un étrier de retenue (18) s'étendant sur au moins trois faces de l'unité de base (1).

2. Appareil de coupe (10) selon la revendication 1, l'appareil de coupe (10) présentant une unité d'extension (2), laquelle présente à nouveau
un étrier supplémentaire (21), lequel est fixé sur l'étrier de retenue (18) de manière à pouvoir être déplacé au moyen d'articulations de raccordement (31) et de préférence de manière amovible.

3. Appareil de coupe (10) selon la revendication 2, l'unité d'extension (2) présentant en outre
une poignée de commande (22), qui peut être montée au choix sur l'étrier supplémentaire (21) ou l'étrier de retenue (18) de manière à pouvoir être déplacée au moyen d'une articulation de couplage (23), la poignée de commande (22) présentant un levier d'accélération (25) destiné à commander l'entraînement (12), et
une poignée de blocage (26), qui peut être montée au choix sur l'étrier supplémentaire (21) ou sur l'étrier de retenue (18) de manière à pouvoir être déplacée au moyen d'un support de poignée (27), la poignée de blocage (26) présentant un commutateur de blocage (32) destiné à commander l'entraînement (12).

4. Appareil de coupe (10) selon la revendication 3, le levier d'accélération (25) ainsi que le commutateur de blocage (32) interrompant aussi bien l'un que l'autre au moins un déplacement de la lame (13) dès qu'ils ne sont pas actionnés.

5. Appareil de coupe (10) selon la revendication 3 ou 4, la poignée de blocage (26) étant conçue en suivant une courbure de l'étrier supplémentaire (21) et/ou de l'étrier de retenue (18) et pouvant ainsi être actionnée sur deux sections de l'étrier supplémentaire (21) et/ou de l'étrier de retenue (18) disposées suivant un angle l'une par rapport à l'autre, l'angle cité étant de préférence au moins approximativement un angle droit.

6. Appareil de coupe (10) selon l'une quelconque des revendications précédentes, l'unité de collecte (3) présentant une courroie (35) avec laquelle l'unité de collecte (3) peut être portée par un utilisateur de l'appareil de coupe (10).

7. Appareil de coupe (10) selon l'une quelconque des revendications précédentes, l'unité de base (1) présentant une courroie de délestage (36) avec laquelle au moins une partie du poids de l'unité de base (1) peut être transférée sur un utilisateur de l'appareil de coupe (10).

8. Appareil de coupe (10) selon la revendication 7, la courroie de délestage (36) présentant une section extensible (37).

9. Appareil de coupe (10) selon la revendication 8, la longueur de la section extensible (37) pouvant être réglée, en particulier dans une plage comprise entre 35 cm et 60 cm.

10. Appareil de coupe (10) selon l'une quelconque des revendications précédentes, un pied d'appui (17), qui empêche un basculement de l'appareil de coupe (10) posé sur une surface de base plane, étant conçu sur un boîtier de guidage (16) à travers lequel le produit coupé est soufflé dans l'unité de collecte (3).

11. Unité de base (1) pour un appareil de coupe portatif (10) selon l'une quelconque des revendications précédentes, l'unité de base (1) présentant une unité de coupe (11) destinée à couper les plantes, et l'unité de coupe (11) présentant à nouveau un entraînement (12), une lame (13) et une soufflante (14) dotée de buses (15), afin de souffler le produit coupé dans une unité de collecte (3),
**caractérisé en ce que**
l'unité de base (1) présente un étrier de retenue (18) s'étendant sur au moins trois faces de l'unité de base (1).

12. Unité d'extension (2) pour un appareil de coupe portatif (10) selon l'une quelconque des revendications 1 à 10, présentant
un étrier supplémentaire (21), lequel est fixé sur l'étrier de retenue (18) de manière à pouvoir être déplacé au moyen d'articulations de raccordement (31) et de préférence de manière amovible.
une poignée de commande (22), qui peut être montée au choix sur l'étrier supplémentaire (21) ou l'étrier de maintien (18) de manière à pouvoir être déplacé au moyen d'une articulation de couplage (23), la poignée de commande (22) présentant un levier d'accélération (25) destiné à commander l'entraînement (12), et
une poignée de blocage (26), qui peut être montée au choix sur l'étrier supplémentaire (21) ou sur l'étrier de retenue (18) de manière à pouvoir être déplacée au moyen d'un support de poignée (27), la poignée de blocage (26) présentant un commutateur de blocage (32) destiné à commander l'entraînement (12).

13. Unité d'extension (2) selon la revendication 12, l'étrier supplémentaire (21) pouvant être déplacé par rapport à l'étrier de retenue (18) au moyen des articulations de raccordement (31).

14. Unité d'extension (2) selon la revendication 12 ou 13, l'étrier supplémentaire (21) pouvant être amené en rotation par rapport à l'étrier de retenue (18) au moyen des articulations de raccordement (31).
